# EUROPÄISCHE PATENTSCHRIFT

(11) **EP 3 141 096 B1**
(45) Veröffentlichungstag und Bekanntmachung des Hinweises auf die Patenterteilung: **05.12.2018**
(21) Anmeldenummer: 16184260.4
(22) Anmeldetag: 16.08.2016
(51) Int. Cl.: A01C 21/00

(54) **VERFAHREN ZUM AUSBRINGEN VON SAATGUTPARTIKELN ODER PFLANZEN AUF EIN FELD UND EINE ENTSPRECHENDE MASCHINE**
METHOD FOR THE APPLICATION OF SEED PARTICLES OR PLANTS ON A FIELD AND A CORRESPONDING MACHINE
PROCEDE D'EPANDAGE DE PARTICULES DE SEMENCES OU DE PLANTES DANS UN CHAMP ET MACHINE CORRESPONDANTE

(30) Priorität: 14.09.2015 DE 102015217496
(43) Veröffentlichungstag der Anmeldung: 15.03.2017
(73) Patentinhaber: Deere & Company, Moline, IL 61265 (US)
(72) Erfinder: Wolff, Kilian, 66440 Blieskastel (DE); Reutemann, Marcus, 68535 Edingen-Neckarhausen (DE); Vollmar, Uwe, 66482 Zweibrücken (DE); Bartolein, Christian, 67134 Birkenheide (DE); Werner, Roland, 68535 Edingen-Neckarhausen (DE)
(74) Vertreter: Holst, Sönke

(56) Entgegenhaltungen:
- EP-A2- 1 475 609
- DE-A1- 19 961 442
- DE-A1-102005 010 686
- DE-A1-102012 203 761

## Beschreibung

Die vorliegende Erfindung betrifft ein Verfahren zum Ausbringen von Saatgutpartikeln oder Pflanzen auf ein Feld und eine entsprechende Maschine.

### Stand der Technik

Bei der Arbeit auf landwirtschaftlichen Flächen finden satellitengestützte Positionsbestimmungssysteme unter anderem Verwendung, um bei Sä- oder Pflanzarbeiten einzelne Saatgutpartikel oder Pflanzen an bestimmten Stellen in den Boden einzubringen. Auf diese Weise kann man bestimmte Muster erzielen (DE 102 51 114 A1), die auch Fahrspuren zur Feldbearbeitung, insbesondere Unkrauthacken, in Quer- oder Diagonalrichtung zur ursprünglichen Pflanzrichtung ermöglichen (DE 10 2005 101 686 A1) oder die Sonneneinstrahlung optimieren (DE 10 2007 040 511 A1).

Üblicherweise findet die Planung der Muster vorab auf einem Rechner statt, wobei die Koordinaten festgelegt werden, an denen die Saatgutpartikel oder Pflanzen in den Boden eingesetzt werden, um das gewünschte Muster zu erzielen, oder es wird auf dem Feld eine erste Reihe ausgebracht und die nachfolgenden Reihen werden gegenüber der Vorwärtsrichtung der Sä- oder Pflanzmaschine mit der ersten Reihe seitlich ausgerichtet (O. Schmittmann et al., Entwicklung eines Präzisionssägeräteantriebs zur koordinatengesteuerten Ablage von Saatgut, Landtechnik 2010, 286).

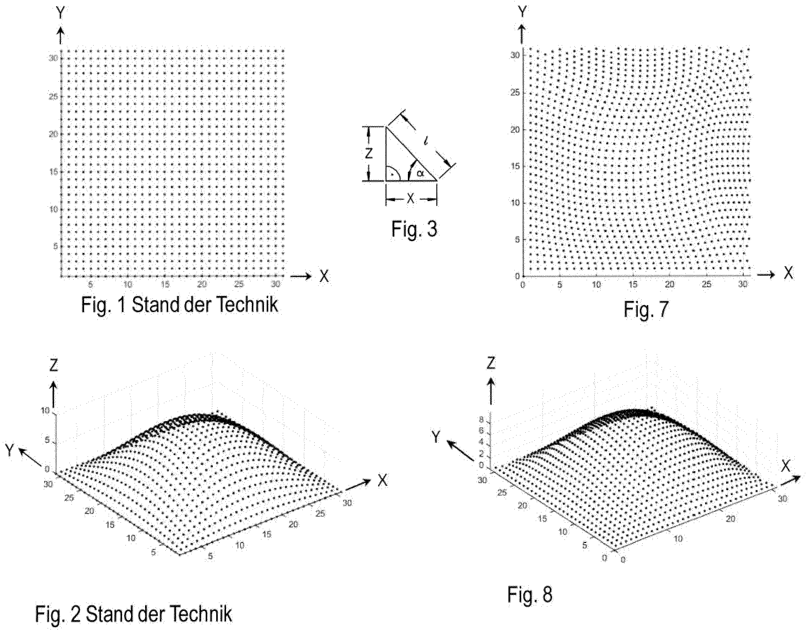

Diese Vorgehensweisen funktionieren relativ gut, solange das Feld in sich völlig horizontal ist, denn die zur Ansteuerung der Sä- oder Pflanzaggregate verwendete Positionsbestimmung basiert im Stand der Technik nur auf zweidimensionalen (horizontalen) Koordinaten, d.h. einer Projektion des Feldes auf eine (vertikale) Höhe von 0. Hierzu sei auf die Figur 1 verwiesen, welche eine Projektion eines quadratischen Feldes in die horizontale Ebene mit typischen, im zweidimensionalen Raum geplanten (oder bei der Arbeit auf dem Feld sich sukzessive ergebenden) Orten zur Saat oder Pflanzung zeigt. Wenn das Feld jedoch in einer oder zwei horizontalen Richtungen geneigt ist, z.B. einen Hügel oder eine Senke aufweist, wie in der Figur 2 gezeigt, führt eine auf der nur zweidimensionalen Ortsbestimmung basierende Ausbringung der Saatgutpartikel oder Pflanzen zu Fehlern, denn die Maschine zum Säen oder Pflanzen legt beim Ansteigen an einem Hang oder Herunterfahren des Hanges tatsächlich (aufgrund der Steigung) einen weiteren Weg zurück als die nur horizontal erfolgende Entfernungsmessung anzeigt. Bei einem Steigungswinkel α ist die tatsächlich zurückgelegte Strecke I die horizontal gemessene Entfernung x multipliziert mit einem Faktor von 1/cos α (vgl. Figur 3). Dadurch wird der Saatgutabstand in der Vorwärtsrichtung in derartigen Fällen um den erwähnten Faktor zu groß werden, was eine gewünschte Bearbeitung entlang der Quer- oder Diagonalrichtung unmöglich werden lässt oder zumindest erschwert, denn die beabsichtigen Reihenabstände werden nicht mehr eingehalten. Dieses Problem ist in der Figur 2 an den Flanken des mittigen Hügels auf dem Feld gut zu erkennen: Bei einer Ausbringung des Saat- oder Pflanzmaterials mit einer einreihigen Maschine, die auf einer zweidimensionalen Karte und Positionsbestimmung beruht, werden die Abstände zwischen benachbarten Pflanzen an den geneigten Flächen größer als in der Ebene, sowohl in x- als auch in y-Richtung. Eine Bearbeitung zwischen den Reihen mit einem mehrreihigen Werkzeug wird wegen der variierenden Abstände zwischen den Pflanzen nicht möglich sein. Anzumerken ist, dass man tatsächlich wohl eine mehrreihige Sä- oder Pflanzmaschine verwenden wird, bei der die Abstände zwischen benachbarten Pflanzen quer zur Vorwärtsrichtung zwangsläufig konstant bleiben, jedoch in deren Vorwärtsrichtung beim Befahren von Steigungen variieren.

Es wurde zwar vorgeschlagen, bei Arbeiten an einem seitlichen Hang die dann verringerte, in die Horizontale projizierte Arbeitsbreite zu berücksichtigen und somit benachbarte Spuren in der horizontalen Projektion näher aneinander zu legen als auf einem horizontalen Feld (EP 1 475 609 A2), jedoch hat dies keinerlei Auswirkung auf die Ausbringung der Saatgutpartikel oder Pflanzen entlang der Vorwärtsrichtung der Maschine. Der erwähnte Fehler bliebe somit bestehen. Das gilt analog auch für im Vorab erfolgende Wegplanungen, welche die dreidimensionale Form des Feldes berücksichtigen (J. Jin et al., Coverage Path Planning on Three-Dimensional Terrain for Arable Farming, Journal of Field Robotics 28(3), 424-440 (2011) und I.A. Hamed, Intelligent Coverage Path Planning for Agricultural Robots and Autonomous Machines on Three-Dimensional Terrain, J. Intell. Robot Syst. (2014) 74:965-983).

Die als gattungsbildend angesehene DE 10 2012 203 761 A1 beschreibt eine Sämaschine, deren Position im zwei- oder dreidimensionalen Koordinatensystem erfasst wird. Ein Bediener kann gewünschte Abstände von Saatkornablagepositionen in Vorwärtsrichtung eingeben. Der Antrieb einer Säeinheit wird demnach bei Verwendung einer zweidimensionalen, horizontalen Positionsbestimmung immer dann aktiviert, wenn der gewünschte horizontale Abstand von einer vorigen Saatgutabgabe erreicht wurde. Mittels eines geeigneten Sensors wird die genaue Ablageposition des Saatguts erfasst und die Säeinheit bei eventuellen Abweichungen jeweils weiter vorn oder weiter hinten bzw. früher oder später aktiviert. Anhand des erfassten Neigungswinkels des Feldes kann eine Korrektur des Abgabezeitpunktes vorgenommen werden, um zu berücksichtigen, dass das Saatgut bergab rollen wird.

### Aufgabe

Die vorliegende Erfindung hat sich zum Ziel gesetzt, die Nachteile des Standes der Technik zu vermeiden und ein Verfahren zum Ausbringen von Saatgutpartikeln oder Pflanzen auf ein Feld und eine entsprechende Maschine bereitzustellen, das und die auch bei einem nicht-horizontalen Feld das Einhalten eines bestimmten Abstands oder Musters der Saatgutpartikel oder Pflanzen beim Ausbringen ermöglicht.

### Lösung

Die vorliegende Erfindung wird durch die Ansprüche definiert.

Verfahren zum Ausbringen von Saatgutpartikeln oder Pflanzen auf ein Feld, mit folgenden Schritten:Bereitstellen einer Maschine (36) zum Ausbringen der Saatgutpartikel oder Pflanzen, die in einer Arbeitsrichtung (V) über das Feld bewegbar und mit einem zweidimensionale, horizontale Koordinaten ausgebenden Positionsbestimmungssystem (94) ausgestattet ist,Festlegen des in Arbeitsrichtung gemessenen Abstands (Iₛₒₗₗ), mit welchem benachbarte Saatgutpartikel oder Pflanzen auf dem Feld ausgebracht werden sollen,Ermitteln der Neigung (α) des Felds entlang der Arbeitsrichtung (V) der Maschine (36), undAusbringen der Saatgutpartikel oder Pflanzen im festgelegten Abstand (Iₛₒₗₗ) durch eine Sä- oder Pflanzeinrichtung (60), basierend auf den vom Positionsbestimmungssystem (94) ausgegebenen, zweidimensionalen Koordinaten und der Neigung (a) des Felds in Arbeitsrichtung (V),wobei die Maschine (36) mehrere, quer zur Arbeitsrichtung seitlich nebeneinander angeordnete Sä- oder Pflanzeinrichtungen (60) umfasst, die getrennt voneinander im Sinne des Einhaltens eines zweidimensionalen Musters der ausgebrachten Saatgutpartikel oder Pflanzen angesteuert werden, dadurch gekennzeichnet, dass die Sä- oder Pflanzeinrichtung (60) aktiviert wird, wenn seit ihrer letzten Aktivierung die anhand des Positionsbestimmungssystems erfasste, im horizontalen Koordinatensystem gemessene Strecke x = Iₛₒₗₗ • cos (α) zurückgelegt worden ist,und dass die Parameter des Musters zusätzlich zum Abstand (Iₛₒₗₗ) benachbarter Saatgutpartikel oder Pflanzen entlang der Arbeitsrichtung (V) der Maschine (36) den relativen Versatz (d) von Saatgutpartikeln oder Pflanzen entlang der Arbeitsrichtung (V) der Maschine (36) zweier quer zur Arbeitsrichtung (V) der Maschine (36) benachbarter Reihen betreffen.

Eine entsprechende Vorrichtung zum Ausbringen von Saatgutpartikeln oder Pflanzen auf ein Feld, mit einer Maschine (36) zum Ausbringen der Saatgutpartikel oder Pflanzen, die in einer Arbeitsrichtung (V) über das Feld bewegbar und mit einem zweidimensionale, horizontale Koordinaten ausgebenden Positionsbestimmungssystem (94) gekoppelt ist, mit: Mitteln zum Festlegen des in Arbeitsrichtung (V) gemessenen Abstands (Iₛₒₗₗ), mit welchem benachbarte Saatgutpartikel oder Pflanzen auf dem Feld ausgebracht werden sollen,einer Einrichtung zum Ermitteln der Neigung (a) des Felds entlang der Arbeitsrichtung (V) der Maschine (36), und einer Steuerung (92), die mit einer Sä- oder Pflanzeinrichtung (60) zum Ausbringen der Saatgutpartikel oder Pflanzen signalübertragend verbunden und konfiguriert ist, die Sä- oder Pflanzeinrichtung (60) anzusteuern, die Saatgutpartikel oder Pflanzen im festgelegten Abstand (Iₛₒₗₗ) auf dem Feld auszubringen, basierend auf den vom Positionsbestimmungssystem (94) ausgegebenen, zweidimensionalen Koordinaten und der Neigung (a) des Felds in Arbeitsrichtung (V), wobei die Maschine (36) mehrere, quer zur Arbeitsrichtung seitlich nebeneinander angeordnete Sä- oder Pflanzeinrichtungen (60) umfasst, die durch die Steuerung (92) getrennt voneinander im Sinne des Einhaltens eines zweidimensionalen Musters der ausgebrachten Saatgutpartikel oder Pflanzen ansteuerbar sind, dadurch gekennzeichnet, dass die Steuerung (92) konfiguriert ist, die Sä- oder Pflanzeinrichtung (60) zu aktivieren, wenn seit ihrer letzten Aktivierung die anhand des Positionsbestimmungssystems erfasste, im horizontalen Koordinatensystem gemessene Strecke x = Iₛₒₗₗ • cos (α) zurückgelegt worden ist,und dass die Parameter des Musters zusätzlich zum Abstand (Iₛₒₗₗ) benachbarter Saatgutpartikel oder Pflanzen entlang der Arbeitsrichtung (V) der Maschine (36) den relativen Versatz (d) von Saatgutpartikeln oder Pflanzen entlang der Arbeitsrichtung (V) der Maschine (36) zweier quer zur Arbeitsrichtung (V) der Maschine (36) benachbarter Reihen betreffen.

Mit anderen Worten wird anhand der Neigung des Feldes der Fehler des zweidimensionalen Positionsbestimmungssystems beim Befahren von Steigungs- oder Gefällestrecken in der Arbeitsrichtung der Maschine kompensiert. Beträgt der gewünschte Abstand zwischen zwei Pflanzen in Arbeitsrichtung der Maschine, der durch einen Bediener mittels einer Bedienerschnittstelle in eine Steuerung eingegeben werden kann, demnach Iₛₒₗₗ und legt die Maschine die anhand des Positionsbestimmungssystems erfasste, im horizontalen Koordinatensystem gemessene Strecke x zurück, wird genau dann die Sä- oder Pflanzeinrichtung aktiviert, wenn seit der letzten Aktivierung die horizontale Strecke x = Iₛₒₗₗ • cos (α) zurückgelegt worden ist, wobei α der Steigungswinkel ist (vgl. Figur 3). Auf diese Weise erreicht man, dass der (entlang der Oberfläche des Feldbodens gemessene) Abstand der Pflanzen mit dem gewünschten Abstand übereinstimmt, auch bei Verwendung eines zweidimensionale Koordinaten ausgebenden Positionsbestimmungssystems. Somit kann auch an geneigten Flächen eine Bearbeitung quer oder diagonal zur Arbeitsrichtung der Maschine erfolgen.

Die Planung der Positionen, an denen die Saatgutpartikel oder Pflanzen ausgebracht werden sollen, kann beim Ausbringvorgang erfolgen. Dann wird die horizontal zurückgelegte Strecke anhand des Positionsbestimmungssystems erfasst und mit der Neigung α kompensiert, um den gewünschten Abstand einzuhalten. Andererseits kann auch eine Vorplanung erfolgen, bei der anhand einer dreidimensionalen Karte des Feldes zweidimensionale Sollpositionen bestimmt und an die Steuerung der Maschine übertragen werden, die dann beim Erreichen der Sollpositionen den Ausbringvorgang aktiviert.

Das Positionsbestimmungssystem, die Einrichtung zum Ermitteln der Neigung des Felds und/oder die Steuerung können sich ganz oder teilweise an Bord der Maschine oder an Bord eines die Maschine ziehenden Fahrzeugs befinden. Im zweiten Fall ist die Maschine mit dem sie ziehenden Fahrzeug als Maschine im Sinne der Patentansprüche anzusehen.

Die Neigung des Felds kann anhand eines Neigungssensors und/oder anhand einer vom Positionsbestimmungssystem das eine oder mehrere Antennen umfassen kann, die in Arbeitsrichtung und/oder in Querrichtung über die Maschine verteilt sein können, bereitgestellten Höheninformation und/oder anhand einer im Vorab auf beliebige Weise erstellten, dreidimensionalen Karte des Felds ermittelt werden.

Die Maschine umfasst mehrere, quer zur Arbeitsrichtung seitlich nebeneinander angeordnete Sä- oder Pflanzeinrichtungen, die getrennt voneinander im Sinne des Einhaltens eines zweidimensionalen Musters der ausgebrachten Saatgutpartikel oder Pflanzen angesteuert werden. Hierbei wäre auch denkbar, unterschiedliche Neigungswinkel über die Arbeitsbreite der Maschine (sei es anhand der dreidimensionalen Karte des Feldes oder mehrerer Neigungssensoren) zu erfassen und einzelne Sä- oder Pflanzeinheiten der Maschine entsprechend der zugehörigen Neigung α anzusteuern.

Die Parameter des Musters betreffen zusätzlich zum Abstand benachbarter Saatgutpartikel oder Pflanzen entlang der Arbeitsrichtung der Maschine den relativen Versatz von Saatgutpartikeln oder Pflanzen entlang der Arbeitsrichtung der Maschine zweier quer zur Arbeitsrichtung der Maschine benachbarter Reihen.

Insbesondere wird die Maschine beim Befahren benachbarter Spuren auf dem Feld im Sinne einer Ausrichtung der Saatgutpartikel oder Pflanzen quer zur Arbeitsrichtung angesteuert (vgl. DE 10 2005 101 686 A1, DE 10 2007 040 511 A1 und Schmittmann et al., a.a.O.), um das Feld anschließend in einer quer und/oder diagonal zur Arbeitsrichtung der Maschine verlaufenden Richtung bearbeiten zu können, z.B. beim Bekämpfen von Wildkräutern, Düngen etc., oder um eine gewünschte Einfallsrichtung für Sonnenlicht oder Wind zu erzielen. Diese Ausrichtung kann im Vorab geplant werden, wenn die Steuerung anhand von Sollpositionen angesteuert wird, oder während des Sävorgangs anhand der bei einer ersten Überfahrt erzielten Positionen der ausgebrachten Saatgutpartikel oder Pflanzen vorgenommen werden, wobei es sich um anhand des Zeitpunkts bzw. Orts der Aktivierung der Maschine erfasste Positionen handeln kann oder um tatsächliche Positionen des Saatguts oder der Pflanzen, die mittels eines geeigneten Sensors, wie einer Kamera erfasst werden können (vgl. DE 10 2012 203 761 A1).

### Ausführungsbeispiel

In den Zeichnungen ist ein nachfolgend näher beschriebenes Ausführungsbeispiel der Erfindung dargestellt. Es zeigt:
- Fig. 1: eine schematische, zweidimensionale Darstellung eines dreidimensionalen Felds mit darauf mit einer dem Stand der Technik entsprechenden Sämaschine ausgebrachten Pflanzen,
- Fig. 2: eine schematische, dreidimensionale Darstellung des Felds der Figur 1,
- Fig. 3: eine Darstellung der Geometrie beim Ausbringen von Saatgutpartikeln oder Pflanzen an einem Hang,
- Fig. 4: eine schematische, seitliche Ansicht einer Maschine zum Ausbringen von Saatgut, die an einem Ackerschlepper angebracht ist,
- Fig. 5: eine Draufsicht auf die Maschine der Figur 4 beim Ausbringen von Saatgut auf ein Feld,
- Fig. 6: ein Flussdiagramm, nach dem die Steuerung der Maschine vorgeht,

- Fig. 7: eine Darstellung entsprechend Figur 1, jedoch bei erfindungsgemäßer Festlegung der Ausbringung der Pflanzen auf dem Feld, und
- Fig. 8: eine schematische, dreidimensionale Darstellung des Felds der Figur 7.

Die Figuren 1 bis 3 wurden bereits eingangs diskutiert, sodass sich an dieser Stelle eine weitere Erörterung erübrigt.

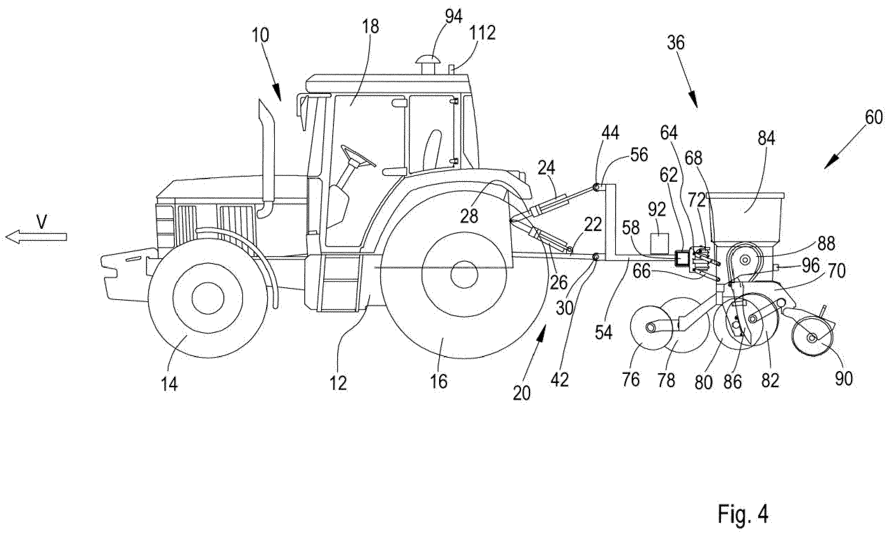

In der Figur 4 ist ein Ackerschlepper 10 dargestellt, der sich auf einem Fahrgestell 12 aufbaut und durch vordere, lenkbare Räder 14 und antreibbare, rückwärtige Räder 16 auf dem Boden abstützt. Ein Bedienerarbeitsplatz befindet sich in einer Kabine 18. Am rückwärtigen Ende des Fahrgestells 12 ist eine Dreipunktkupplung 20 angeordnet, die sich aus zwei nebeneinander angeordneten Unterlenkern 22 und einem darüber angebrachten Oberlenker 28 zusammensetzt. Die Unterlenker 22 sind durch zugehörige, doppelt wirkende Hydraulikzylinder 26 höhenverstellbar, welche die Unterlenker 22 um ihre Anlenkpunkte am Fahrgestell 12 um horizontale, etwa quer zur Vorwärtsrichtung orientierte Achsen verschwenken. Der Oberlenker 28 ist als Hydraulikzylinder 24 ausgeführt und demnach längenveränderbar. Durch Verstellung der Hydraulikzylinder 26 können rückwärtige Koppelpunkte 30 der Unterlenker 22 in eine zum Anbringen einer Sämaschine 36 geeignete Position gebracht werden. Durch Verstellung der Länge des Oberlenkers 28, die anstelle durch den Hydraulikzylinder 24 auch rein mechanisch durch den Bediener von Hand mittels einer geeigneten Schraubspindel erfolgen könnte, kann ein rückwärtiger Koppelpunkt 44 des Oberlenkers 28 in eine zum Anbringen der Sämaschine 36 geeignete Position gebracht werden. Am rückwärtigen Ende der Unterlenker 22 sind in an sich bekannter Weise Unterlenker-Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1: Kategorien 1, 2, 3 und 4 beschrieben werden) angeordnet, während am rückwärtigen Ende des Oberlenkers 28 ein ebenfalls konventioneller Oberlenker-Koppelpunkt 44 vorgesehen ist.

Der Hydraulikzylinder 24 des Oberlenkers 28 dient nur zur einmaligen, anfänglichen Einstellung der Position des Koppelpunkts 44 und wird während des Feldbetriebs nicht verstellt, sondern ist dann (wie die Hydraulikzylinder 26 des Unterlenkers 22) in sich blockiert. Am Feldende kann die Sämaschine 36 ausgehoben werden, indem die Hydraulikzylinder 26 über ein geeignetes Ventil (nicht gezeigt) durch den Bediener oder die Vorgewendeautomatik eingezogen und somit in die Hubstellung gebracht werden, und vor dem Bearbeiten der nächsten Spur analog wieder abgesenkt werden. Dadurch werden die Unterlenker 22 durch die Hydraulikzylinder 26 angehoben und wieder abgesenkt, wodurch auch die Sämaschine 36 angehoben und abgesenkt wird.

Die Sämaschine 36 umfasst ein Haltegestell 54, das durch untere Bolzen 42 an den Unterlenker-Kopplungspunkten 30 der Unterlenker 22 und durch ein oberes Halterungselement 56 und einen Bolzen am Oberlenker-Koppelpunkt 44 befestigt ist. An dem Haltegestell 54 ist ein Querträger 58 befestigt, der sich über die ganze Breite der Sämaschine 36 erstreckt und an dem seitlich nebeneinander in der dargestellten Ausführungsform vier Säeinheiten 60 befestigt sind. Die Befestigung der Säeinheiten 60 am Querträger 58 erfolgt über U-förmige Halterungen 62, die mit einer Konsole 64 verbunden sind, die sich vertikal an der Rückseite des Querträgers 58 erstreckt und an der übereinander zwei Lenker 66, 68 angelenkt sind, die außerdem jeweils an einem Gestell 70 der Säeinheit 60 angelenkt sind. Die Lenker 66, 68 bilden mit der Konsole 64 und dem Gestell 70 ein verstellbares Parallelogramm, das die Höhe des Gestells 70 über dem Boden definiert. Ein pneumatischer Aktor 72 greift einerseits oben an der Konsole 64 und andererseits unten am unteren Lenker 66 an und definiert die Position des Gestells 70 und die Andruckkraft, mit der am Gestell 70 abgestützte Furchenöffner 78, 80 mit dem Erdboden zusammenwirken.

Das Gestell 70 trägt in an sich bekannter Weise einen Saatgutbehälter 84, ein Säschar 86 sowie eine (insbesondere pneumatische, mit von einem nicht gezeigten Gebläse bereitgestellten Unterdruck arbeitende) Zumesseinrichtung 88, die nach und nach einzelne Körner des Saatguts aus dem Saatgutbehälter 84 in das Säschar 86 abgibt, welches es in eine Furche ablegt, die durch den Furchenöffner 80 erzeugt wird, dessen Arbeitstiefe durch ein Tiefeneinstellrad 82 vorgegeben wird. Die Furche wird durch ein Schließrad 90 geschlossen. Eine weitere Furche kann durch einen Furchenöffner 78 erzeugt werden, dessen Arbeitstiefe durch ein Tiefeneinstellrad 76 vorgegeben wird. Diese weitere Furche kann zur Aufnahme von Düngemitteln durch ein weiteres, nicht gezeigtes Schar dienen und ebenfalls durch das Schließrad 90 geschlossen werden. Hinsichtlich weiterer Einzelheiten der Säeinheiten 60 wird auf die Offenbarung der EP 2 517 545 A1 verwiesen. Die Sämaschine 36 könnte auch auf Rädern abgestützt sein und an einer Deichsel hinter dem Ackerschlepper 10 hergezogen werden, anstelle der gezeigten Befestigung an der Dreipunktkupplung 20. Die Sämaschine 36 stellt ein Beispiel einer Maschine zum Ausbringen von Saatgutpartikeln dar und könnte in einer anderen Ausführungsform auch junge Pflanzen oder Sämlinge ausbringen.

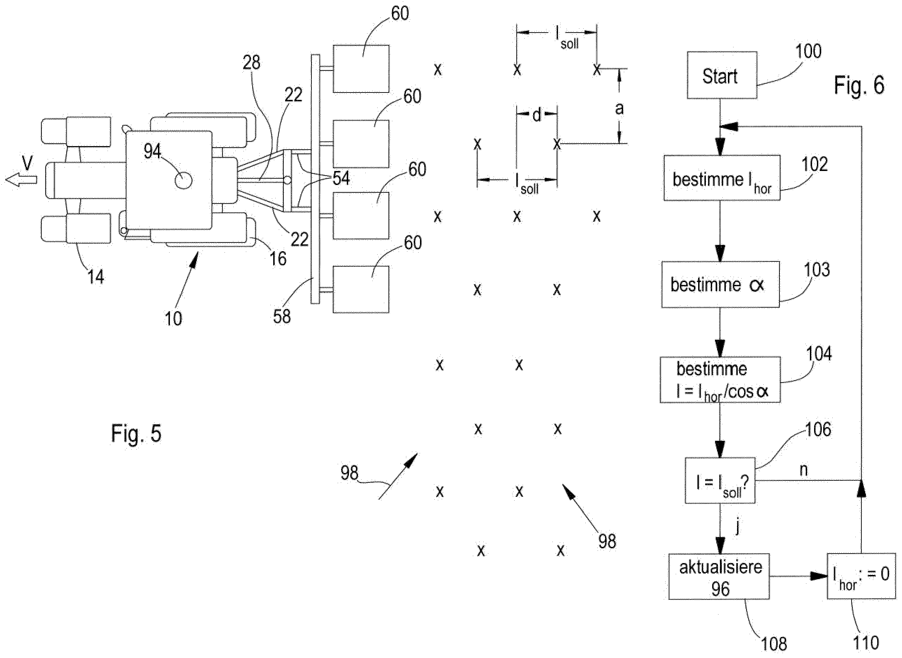

Eine Antenne eines Positionsbestimmungssystems 94 ist auf dem Dach der Kabine 18 angebracht und empfängt Signale von Satelliten z.B. des GPS, Galileo- und/oder Glonass-Systems, um ihre Position zu bestimmen. Die Positionsdaten werden durch das Positionsbestimmungssystem 94 einer Steuerung 92 zugeführt, die wiederum mit Aktoren 96 der Säeinheiten 60 verbunden ist, welche durch die Steuerung 92 aktiviert werden können, jeweils ein Saatgutpartikel in den Boden abzugeben. Das Positionsbestimmungssystem 94 könnte alternativ auf der Sämaschine 36 angebracht sein, wie auch die Steuerung 92 und ein Trägheits- oder Schwerkraftsensor 112 zur Erfassung der Neigung des Felds in Vorwärtsrichtung V. Wenn das Positionsbestimmungssystem 94, die Steuerung 92 und der Trägheits- oder Schwerkraftsensor 112 sich auf dem Ackerschlepper 10 befinden, wie in den Figuren 4 und 5, gezeigt, ist die gezeigte Kombination aus Sämaschine 36 und Ackerschlepper 10 als Maschine zum Ausbringen der Saatgutpartikel oder Pflanzen im Sinne der Ansprüche anzusehen.

Die Steuerung 92 geht im Säbetrieb nach der in den Figuren 5 und 6 dargestellten Weise vor: Der Ackerschlepper 10 wird manuell oder durch das Positionsbestimmungssystem 94 gelenkt in möglichst geraden Spuren in seiner Arbeitsrichtung V über das Feld bewegt und legt in benachbarten Spuren jeweils vier Reihen an Saatgut im Boden ab. Dabei können benachbarte Spuren zeitlich direkt nacheinander befahren werden. Jeweils nach Zurücklegen einer Strecke Iₛₒₗₗ (die durch beliebige Mittel in die Steuerung 92 eingegeben werden können, wie durch eine Bedienerschnittstelle in der Kabine 18, oder extern vorgeplant und an die Steuerung 92 auf beliebige Weise übertragen werden) werden die Aktoren 96 aktiviert, ein Saatgutpartikel in den Boden abzugeben (durch Kreuze angedeutet). Benachbarte Säeinheiten 60 legen ihre Saatgutpartikel um eine Strecke d (die auf analoge Weise wie Iₛₒₗₗ in die Steuerung 82 eingegeben werden kann) versetzt zueinander ab, die beispielsweise der Hälfte von Iₛₒₗₗ entsprechen kann, wie gezeigt. Dabei sind beliebige Muster denkbar, die auch eine so genannte Gleichstandsaat (mit etwa gleichen Abständen zwischen allen Pflanzen) ermöglichen. Auch kann das Feld später diagonal zur Vorwärtsrichtung V befahren werden, wie durch die Pfeile 98 angedeutet. Es wäre auch denkbar, den Versatz d null sein zu lassen, d.h. die Pflanzen in einem quadratischen oder rechteckigen Muster anzubauen, was ein späteres Befahren und Bearbeiten in Querrichtung zur Arbeitsrichtung V ermöglicht.

Die Steuerung 92 geht nach dem Flussdiagramm der Figur 6 vor.

Nach dem Start im Schritt 100 wird im Schritt 102 der seit der letzten Saatgutablage der jeweiligen Säeinheit 60 (hierbei kann es sich um einen anhand der Aktivierung des Aktors 96 bestimmten Ort oder anhand einer durch einen separaten Sensor, vgl. DE10 2012 203 761 A1, der die Position des Saatguts in der Furche sensiert, erfassten Ort handeln) zurückgelegte, horizontale Weg Iₕₒᵣ bestimmt, worauf auf die Signale des Positionsbestimmungssystems 94 zurückgegriffen wird, aus dessen dreidimensionalen Positionssignalen zunächst nur die horizontalen Koordinaten genutzt werden. Anhand dieser horizontalen Koordinaten wird der Weg Iₕₒᵣ berechnet, der dem horizontalen Abstand von der letzten Saatgutablage entspricht (d.h. es wird Iₕₒᵣ = (x²+y²)^{1/2} gesetzt, wobei x und y die seit der letzten Saatgutablage der jeweiligen Säeinheit 60 zurückgelegte Strecken in beliebigen, zueinander orthogonalen Richtungen sind, z.B. in Ost-West und in Nord-Süd-Richtung). Das Positionsbestimmungssystem 94 kann demnach ein kartesisches Koordinatensystem verwenden, wie beschrieben, oder ein beliebiges anderes Koordinatensystem.

Im nachfolgenden Schritt 103 wird der Neigungswinkel des jeweils bearbeiteten Bereichs des Felds (bzw. ein Durchschnittswert der Neigung über eine zuletzt zurückgelegte Distanz) in Arbeitsrichtung V bestimmt. Hierzu kann auf die Signale des Positionsbestimmungssystems 94 und/oder den Trägheits- oder Schwerkraftsensor 112 oder eine in einem Speicher der Steuerung 92 abgelegte, dreidimensionale Karte des Felds zurückgegriffen werden.

Im nächsten Schritt 104 wird die der seit der letzten Saatgutablage der jeweiligen Säeinheit 60 zurückgelegte Weg I entlang des Feldbodens bestimmt (wie in Figur 3 gezeigt), indem Iₕₒᵣ (vgl. Schritt 102) durch cos (vgl. Schritt 103) geteilt wird. Somit wird die neigungskorrigierte, zurückgelegte Strecke bestimmt.

Im Schritt 106 wird geprüft, ob der Weg I gleich Iₛₒₗₗ ist. Ist das nicht der Fall, folgt wieder der Schritt 102, anderenfalls der Schritt 108, in dem die Steuerung 92 den Aktor 96 anweist, ein Saatgutpartikel in den Boden abzugeben. Im Schritt 108 kann die Zeit zwischen der Aktivierung des Aktors 96 und der tatsächlichen Ankunft des Saatguts in der Furche berücksichtigt werden, vgl. DE10 2012 203 761 A1. Auf den Schritt 108 folgt der Schritt 110, in dem Iₛₒₗₗ gleich null gesetzt wird und wieder der Schritt 102.

Die Ausrichtung der Saatgut- oder Pflanzreihen, d.h. ihre Orientierung gegenüber der Nord-Südrichtung oder einer anderen Referenzachse (und somit die Orientierung der Arbeitsrichtung V auf dem Feld), kann im vorab z.B. auf einem Hof-Rechner geplant oder vor Ort auf dem Feld festgelegt werden, insbesondere indem der Bediener des Ackerschleppers 10 eine erste Spur über das Feld abfährt und dabei die ersten vier Pflanzreihen anlegt. Die nachfolgenden Pflanzreihen werden anschließend quer zur Fahrtrichtung mit den bereits vorhandenen Pflanzreihen in Arbeitsrichtung ausgerichtet (vgl. O. Schmittmann et al., a.a.O), um das gewünschte Pflanzmuster zu erhalten, wobei die Positionierung der benachbarten Spuren vorzugsweise selbsttätig durch ein mit dem Positionsbestimmungssystem 94 verbundenes Lenksystem des Ackerschleppers 10 unter Berücksichtigung der seitlichen Neigung des Felds erfolgt (s. EP 1 475 609 A2). Analog kann die genaue Position der Ablage der ersten Pflanze(n) auf dem Feld anhand einer vorgeplanten Karte vorgegeben sein oder durch den Bediener des Ackerschleppers 10 vorgegeben werden.

Bei Verwendung einer vorgegebenen Karte der gewünschten Pflanzenpositionen oder zumindest der Orientierung der Pflanzenreihen und/oder einer Referenzposition einer Pflanze wird diese zunächst auf einem beliebigen Rechner (der als Bestandteil der Steuerung im Sinne der Ansprüche anzusehen ist), auf dem auch eine Karte des Felds verfügbar ist, vorgeplant und auf einen Speicher der Steuerung 92 der Sämaschine 36 übertragen und von dieser zur Ansteuerung der Sämaschine 36 verwendet. In diesem Fall besteht auch die Möglichkeit, benachbarte Spuren zeitlich versetzt zu befahren, z.B. indem zunächst eine oder mehrere Spuren ausgelassen und später befahren wird oder werden, da nur in diesem Fall, anders als beim Planen während des Säens, die seitenhangabhängige Position des Sä- oder Pflanzvorgangs in Querrichtung bereits bekannt ist. Im zweiten (manuell kontrollierten) Fall werden die gewünschten Pflanzenpositionen während des Säens oder Pflanzens generiert.

Bei einem hügeligen Feld, wie es in der Figur 2 dargestellt ist, erhält man bei erfindungsgemäßer Vorgehensweise ein Saatbild nach den Figuren 7 und 8, bei dem durch die Anpassung der Abstände der Pflanzen in der Arbeitsrichtung V der Sämaschine 36 an die Neigung des Felds in der Vorwärtsrichtung jeweils gleiche Abstände der Pflanzen in der Querrichtung und in der Arbeitsrichtung erzielt werden.

## Patentansprüche

1. Verfahren zum Ausbringen von Saatgutpartikeln oder Pflanzen auf ein Feld, mit folgenden Schritten:
Bereitstellen einer Maschine (36) zum Ausbringen der Saatgutpartikel oder Pflanzen, die in einer Arbeitsrichtung (V) über das Feld bewegbar und mit einem zweidimensionale, horizontale Koordinaten ausgebenden Positionsbestimmungssystem (94) ausgestattet ist,
Festlegen des in Arbeitsrichtung gemessenen Abstands (Iₛₒₗₗ), mit welchem benachbarte Saatgutpartikel oder Pflanzen auf dem Feld ausgebracht werden sollen,
Ermitteln der Neigung (α) des Felds entlang der Arbeitsrichtung (V) der Maschine (36), und
Ausbringen der Saatgutpartikel oder Pflanzen im festgelegten Abstand (Iₛₒₗₗ) durch eine Sä- oder Pflanzeinrichtung (60), basierend auf den vom Positionsbestimmungssystem (94) ausgegebenen, zweidimensionalen Koordinaten und der Neigung (α) des Felds in Arbeitsrichtung (V),
wobei die Maschine (36) mehrere, quer zur Arbeitsrichtung seitlich nebeneinander angeordnete Sä- oder Pflanzeinrichtungen (60) umfasst, die getrennt voneinander im Sinne des Einhaltens eines zweidimensionalen Musters der ausgebrachten Saatgutpartikel oder Pflanzen angesteuert werden,
**dadurch gekennzeichnet, dass** die Sä- oder Pflanzeinrichtung (60) aktiviert wird, wenn seit ihrer letzten Aktivierung die anhand des Positionsbestimmungssystems erfasste, im horizontalen Koordinatensystem gemessene Strecke x = Iₛₒₗₗ • cos (α) zurückgelegt worden ist,
und dass die Parameter des Musters zusätzlich zum Abstand (Iₛₒₗₗ) benachbarter Saatgutpartikel oder Pflanzen entlang der Arbeitsrichtung (V) der Maschine (36) den relativen Versatz (d) von Saatgutpartikeln oder Pflanzen entlang der Arbeitsrichtung (V) der Maschine (36) zweier quer zur Arbeitsrichtung (V) der Maschine (36) benachbarter Reihen betreffen.

2. Verfahren nach Anspruch 1, wobei die Neigung (α) des Felds anhand eines Neigungssensors (112) und/oder anhand einer vom Positionsbestimmungssystem (94), das eine oder mehrere Antennen umfassen kann, bereitgestellten Höheninformation und/oder anhand einer dreidimensionalen Karte des Felds ermittelt wird.

3. Verfahren nach einem der Ansprüche 1 oder 2, wobei die Maschine (36) beim Befahren benachbarter Spuren auf dem Feld im Sinne einer Ausrichtung der Saatgutpartikel oder Pflanzen quer zur Arbeitsrichtung (V) angesteuert wird, um das Feld anschließend in einer quer und/oder diagonal zur Arbeitsrichtung (V) der Maschine (36) verlaufenden Richtung bearbeiten zu können.

4. Vorrichtung zum Ausbringen von Saatgutpartikeln oder Pflanzen auf ein Feld, mit einer Maschine (36) zum Ausbringen der Saatgutpartikel oder Pflanzen, die in einer Arbeitsrichtung (V) über das Feld bewegbar und mit einem zweidimensionale, horizontale Koordinaten ausgebenden Positionsbestimmungssystem (94) gekoppelt ist, mit:
Mitteln zum Festlegen des in Arbeitsrichtung (V) gemessenen Abstands (Iₛₒₗₗ), mit welchem benachbarte Saatgutpartikel oder Pflanzen auf dem Feld ausgebracht werden sollen,
einer Einrichtung zum Ermitteln der Neigung (α) des Felds entlang der Arbeitsrichtung (V) der Maschine (36), und
einer Steuerung (92), die mit einer Sä- oder Pflanzeinrichtung (60) zum Ausbringen der Saatgutpartikel oder Pflanzen signalübertragend verbunden und konfiguriert ist, die Sä- oder Pflanzeinrichtung (60) anzusteuern, die Saatgutpartikel oder Pflanzen im festgelegten Abstand (Iₛₒₗₗ) auf dem Feld auszubringen, basierend auf den vom Positionsbestimmungssystem (94) ausgegebenen, zweidimensionalen Koordinaten und der Neigung (α) des Felds in Arbeitsrichtung (V),
wobei die Maschine (36) mehrere, quer zur Arbeitsrichtung seitlich nebeneinander angeordnete Sä- oder Pflanzeinrichtungen (60) umfasst, die durch die Steuerung (92) getrennt voneinander im Sinne des Einhaltens eines zweidimensionalen Musters der ausgebrachten Saatgutpartikel oder Pflanzen ansteuerbar sind,
**dadurch gekennzeichnet, dass** die Steuerung (92) konfiguriert ist, die Sä- oder Pflanzeinrichtung (60) zu aktivieren, wenn seit ihrer letzten Aktivierung die anhand des Positionsbestimmungssystems erfasste, im horizontalen Koordinatensystem gemessene Strecke x = Iₛₒₗₗ • cos (α) zurückgelegt worden ist,
und dass die Parameter des Musters zusätzlich zum Abstand (Iₛₒₗₗ) benachbarter Saatgutpartikel oder Pflanzen entlang der Arbeitsrichtung (V) der Maschine (36) den relativen Versatz (d) von Saatgutpartikeln oder Pflanzen entlang der Arbeitsrichtung (V) der Maschine (36) zweier quer zur Arbeitsrichtung (V) der Maschine (36) benachbarter Reihen betreffen..

5. Vorrichtung nach Anspruch 4, wobei die Einrichtung zum Ermitteln der Neigung des Felds einen Neigungssensor (112) und/oder das eine Höheninformation bereitstellende Positionsbestimmungssystem (94), das eine oder mehrere Antennen umfassen kann, und/oder eine dreidimensionale Karte des Felds umfasst.

6. Vorrichtung nach einem der Ansprüche 4 oder 5, wobei die Maschine (36) beim Befahren benachbarter Spuren auf dem Feld durch die Steuerung (92) im Sinne einer Ausrichtung der Saatgutpartikel oder Pflanzen quer zur Arbeitsrichtung (V) ansteuerbar ist, um das Feld anschließend in einer quer und/oder diagonal zur Arbeitsrichtung (V) der Maschine (36) verlaufenden Richtung bearbeiten zu können.

## Claims

1. Method for discharging seed particles or plants onto a field, comprising the following steps:
making available a machine (36) for discharging the seed particles or plants, which machine (36) can be moved over the field in a working direction (V) and is equipped with a position-determining system (94) which outputs two-dimensional, horizontal coordinates,
defining the distance (Iₛₒₗₗ), measured in the working direction, at which adjacent seed particles or plants are to be discharged onto the field,
determining the inclination (α) of the field in the working direction (V) of the machine (36), and
discharging the seed particles or plants at the defined distance (Iₛₒₗₗ) by means of a sowing or planting device (60), on the basis of the two-dimensional coordinates, output by the position-determining system (94), and the inclination (α) of the field in the working direction (V),
wherein the machine (36) comprises a plurality of sowing or planting devices (60) which are arranged laterally one next to the other transversely with respect to the working direction and are actuated separately from one another with the aim of maintaining a two-dimensional pattern of the discharged seed particles or plants,
**characterized in that** the sowing or planting device (60) is activated if the distance x = Iₛₒₗₗ · cos (α) which has been detected by means of the position-determining system and is measured in the horizontal coordinate system has been travelled along since the last activation of said sowing or planting device (60),
and **in that** the parameters of the pattern relate, in addition to the distance (Iₛₒₗₗ) between adjacent seed particles or plants in the working direction (V) of the machine (36), to the relative offset (d) of seed particles or plants in the working direction (V) of the machine (36) in two rows which are adjacent transversely with respect to the working direction (V) of the machine (36).

2. Method according to Claim 1, wherein the inclination (α) of the field is determined on the basis of an inclination sensor (112) and/or on the basis of altitude information which is made available by the position-determining system (94), which can comprise one or more antennas, and/or on the basis of a three-dimensional map of the field.

3. Method according to one of Claims 1 and 2, wherein as the machine (36) travels along adjacent tracks on the field it is actuated with the aim of orienting the seed particles or plants transversely with respect to the working direction (V), in order to be able to till the field subsequently in a direction running transversely and/or diagonally with respect to the working direction (V) of the machine (36).

4. Apparatus for discharging seed particles or plants onto a field, with a machine (36) for discharging the seed particles or plants, which machine (36) can be moved over the field in a working direction (V) and is coupled to a position-determining system (94) which outputs two-dimensional, horizontal coordinates, having:
means for defining the distance (Iₛₒₗₗ), measured in the working direction (V), at which adjacent seed particles or plants are to be discharged onto the field,
a device for determining the inclination (α) of the field in the working direction (V) of the machine (36), and
a controller (92) which is connected in a signal-transmitting fashion to a sowing or planting device (60) for discharging the seed particles or plants, and is configured to actuate the sowing or planting device (60) to discharge the seed particles or plants at the defined distance (Iₛₒₗₗ) onto the field, on the basis of the two-dimensional coordinates, output by the position-determining system (94), and the inclination (α) of the field in the working direction (V),
wherein the machine (36) comprises a plurality of sowing or planting devices (60) which are arranged laterally one next to the other transversely with respect to the working direction and can be actuated separately from one another by the controller (92), with the aim of maintaining a two-dimensional pattern of the discharged seed particles or plants,
**characterized in that** the controller (92) is configured to activate the sowing or planting device (60) if the distance x = Iₛₒₗₗ · cos (α) which has been detected by means of the position-determining system and is measured in the horizontal coordinate system has been travelled along since the last activation of said sowing or planting device (60),
and **in that** the parameters of the pattern relate, in addition to the distance (Iₛₒₗₗ) between adjacent seed particles or plants in the working direction (V) of the machine (36), to the relative offset (d) of seed particles or plants in the working direction (V) of the machine (36) in two rows which are adjacent transversely with respect to the working direction (V) of the machine (36).

5. Appartus according to Claim 4, wherein the device for determining the inclination of the field comprises an inclination sensor (112) and/or the position-determining system (94) which makes available altitude information and which can comprise one or more antennas, and/or a three-dimensional map of the field.

6. Apparatus according to one of Claims 4 and 5, wherein as the machine (36) travels along adjacent tracks on the field it can be actuated by the controller (92) with the aim of orienting the seed particles or plants transversely with respect to the working direction (V), in order to be able to till the field subsequently in a direction running transversely and/or diagonally with respect to the working direction (V) of the machine (36).

## Revendications

1. Procédé pour épandre des particules de semence ou des plantes sur un champ, comprenant les étapes suivantes :
mise à disposition d'une machine (36) pour l'épandage des particules de semence ou des plantes, laquelle peut être déplacée dans une direction de travail (V) au-dessus du champ et est équipée d'un système de détermination de position (94) qui délivre des coordonnées horizontales bidimensionnelles,
définition de l'écart (Iₛₒₗₗ), mesuré dans la direction de travail, auquel les particules de semence ou les plantes voisines doivent être épandues sur le champ,
détermination de l'inclinaison (α) du champ le long de la direction de travail (V) de la machine (36), et
épandage des particules de semence ou des plantes à l'écart (Iₛₒₗₗ) défini par un dispositif d'ensemencement ou de repiquage (60) en se basant sur les coordonnées bidimensionnelles délivrées par le système de détermination de position (94) et l'inclinaison (α) du champ dans la direction de travail (V),
la machine (36) comportant plusieurs dispositifs d'ensemencement ou de repiquage (60) disposés latéralement les uns à côté des autres transversalement à la direction de travail, lesquels sont commandés séparément les uns des autres dans le sens du respect d'un modèle bidimensionnel des particules de semence ou des plantes épandues,
**caractérisé en ce que** le dispositif d'ensemencement ou de repiquage (60) est activé lorsque la distance x = Iₛₒₗₗ • cos(α), détectée à l'aide du système de détermination de position et mesurée dans le système de coordonnées horizontal a été parcourue depuis sa dernière activation, et **en ce que** les paramètres du modèle concernent, en plus de l'écart (Iₛₒₗₗ) entre les particules de semence ou les plantes voisines le long de la direction de travail (V) de la machine (36), le décalage relatif (d) des particules de semence ou des plantes le long de la direction de travail (V) de la machine (36) de deux rangées voisines transversalement à la direction de travail (V) de la machine (36).

2. Procédé selon la revendication 1, l'inclinaison (α) du champ étant déterminée à l'aide d'un capteur d'inclinaison (112) et/ou à l'aide d'une information de hauteur fournie par le système de détermination de position (94), lequel peut comporter une ou plusieurs antennes, et/ou à l'aide d'une carte dimensionnelle du champ.

3. Procédé selon l'une des revendications 1 ou 2, la machine (36), lors du franchissement de traces voisines sur le champ, étant commandée dans le sens d'une orientation des particules de semence ou des plantes transversalement à la direction de travail (V) afin de pouvoir traiter ensuite le champ dans une direction qui s'étend transversalement et/ou en diagonale par rapport à la direction de travail (V) de la machine (36).

4. Arrangement pour épandre des particules de semence ou des plantes sur un champ, comprenant une machine (36) pour l'épandage des particules de semence ou des plantes, laquelle peut être déplacée dans une direction de travail (V) au-dessus du champ et est couplée à un système de détermination de position (94) qui délivre des coordonnées horizontales bidimensionnelles, comprenant :
des moyens servant à définir l'écart (Iₛₒₗₗ), mesuré dans la direction de travail (V), auquel les particules de semence ou les plantes voisines doivent être épandues sur le champ,
un dispositif servant à déterminer l'inclinaison (α) du champ le long de la direction de travail (V) de la machine (36), et
une commande (92) qui est reliée en transmission de signal à un dispositif d'ensemencement ou de repiquage (60) servant à épandre des particules de semence ou des plantes et qui est configurée pour commander le dispositif d'ensemencement ou de repiquage (60) afin qu'il épande les particules de semence ou les plantes sur le champ à l'écart (Iₛₒₗₗ) défini en se basant sur les coordonnées bidimensionnelles délivrées par le système de détermination de position (94) et l'inclinaison (α) du champ dans la direction de travail (V),
la machine (36) comportant plusieurs dispositifs d'ensemencement ou de repiquage (60) disposés latéralement les uns à côté des autres transversalement à la direction de travail, lesquels peuvent être commandés séparément les uns des autres par la commande (92) dans le sens du respect d'un modèle bidimensionnel des particules de semence ou des plantes épandues,
**caractérisé en ce que** la commande (92) est configurée pour activer le dispositif d'ensemencement ou de repiquage (60) lorsque la distance x = Iₛₒₗₗ • cos(α), détectée à l'aide du système de détermination de position et mesurée dans le système de coordonnées horizontal a été parcourue depuis sa dernière activation,
et **en ce que** les paramètres du modèle concernent, en plus de l'écart (Iₛₒₗₗ) entre les particules de semence ou les plantes voisines le long de la direction de travail (V) de la machine (36), le décalage relatif (d) des particules de semence ou des plantes le long de la direction de travail (V) de la machine (36) de deux rangées voisines transversalement à la direction de travail (V) de la machine (36).

5. Arrangement selon la revendication 4, le dispositif servant à déterminer l'inclinaison du champ comportant un capteur d'inclinaison (112) et/ou le système de détermination de position (94) qui fournit une information de hauteur et qui peut comporter une ou plusieurs antennes, et/ou une carte tridimensionnelle du champ.

6. Arrangement selon l'une des revendications 4 ou 5, la machine (36), lors du franchissement de traces voisines sur le champ, pouvant être commandée par la commande (92) dans le sens d'une orientation des particules de semence ou des plantes transversalement à la direction de travail (V) afin de pouvoir traiter ensuite le champ dans une direction qui s'étend transversalement et/ou en diagonale par rapport à la direction de travail (V) de la machine (36).
